# EUROPÄISCHE PATENTANMELDUNG

(11) **EP 4 790 267 A1**
(43) Veröffentlichungstag der Anmeldung: **12.08.2026**
(21) Anmeldenummer: 25155938.1
(22) Anmeldetag: 05.02.2025
(51) Int. Cl.: F16B 35/04, F16B 37/14, F16B 35/06, F03D 80/50, F16B 19/02, F16H 57/08, F16H 57/00

(54) **FIXIERMITTEL FÜR GETRIEBEKOMPONENTE**

(71) Anmelder: Flender GmbH, 46395 Bocholt (DE)
(72) Erfinder: KIEKS, Hans-Jürgen, 46395 Bocholt (DE); BOLLWERK, Andreas, 46395 Bocholt (DE)
(74) Vertreter: Michalski Hüttermann & Partner mbB

(57) **Zusammenfassung**

Fixiermittel 10 für eine Getriebekomponente 110, umfassend einen Grundkörper 16 mit einem ersten 18 und zumindest einem zweiten Außengewinde 20 und einem in axialer Richtung des Grundkörpers 16 sich erstreckenden Durchgangsloch 22, einen in dem Durchgangsloch 22 verschiebbar einsitzenden Bolzen 24 und eine auf das zweite Außengewinde 20 aufschraubbare Verschlussmutter 26, um das Durchgangsloch 22 einseitig zu verschließen. Es wird ein mehrteiliges System bereitgestellt, bei dem der Bolzen 24 mittelbar über den in der Getriebekomponente 110 einsitzenden Grundkörper 16 und die Verschlussmutter 26 verspannt wird.

## Beschreibung

Die Erfindung betrifft ein Fixiermittel für ein Getriebeteil, mit einem Grundkörper mit zumindest einem Außengewinde und einem in axialer Richtung des Grundkörpers sich erstreckenden Durchgangsloch und einen in dem Durchgangsloch verschiebbar einsitzenden Bolzen.

Zur Montage und Demontage großer Getriebe, etwa von Planetengetrieben in Antriebssträngen von Windkraftanlagen, kann es erforderlich sein, einzelne Komponenten temporär zu fixieren. Ist beispielsweise das Getriebe voll integriert in den Triebstrang, übernimmt die Hauptlagereinheit die Lagerung des Planetenträgers der ersten Planetenstufe, und dieser Planetenträger verfügt über keine eigene Lagerung. Damit das Getriebe an die Hauptlagereinheit montiert werden kann, muss der Planetenträger in einer zuvor eingestellten Position fixiert werden. Ohne exakte Fixierung und Positionierung des Planetenträgers besteht in den Folgeschritten ein Risiko der Deplatzierung, was sicherheitstechnisch kritisch ist und die Qualität des Folgeprozesses bzw. des finalen Produktes gefährden kann.

Derzeit wird als Fixiermittel ein einteiliger Gewindebolzen eingesetzt, der die Funktion der Positionierung des Planetenträgers erfüllt, allerdings mit dem Nachteil, dass es immer wieder zu Gewindefressern kommt. In diesem Fall muss das Getriebe wieder von der Hauptlagereinheit demontiert werden, Bauteile müssen ausgetauscht und nachgearbeitet werden. Dies führt zu hohen Kosten und Lieferverzögerungen. In diesem Zusammenhang ist die DE 10 2019 214 094 A1 zu nennen. Es besteht ein ständiges Bedürfnis den beschriebenen Prozess mit verbesserten Fixiermitteln sicherer zu machen.

Es ist die Aufgabe der Erfindung Maßnahmen aufzuzeigen, die es ermöglichen, verbesserte Fixiermittel bereitzustellen.

Die Lösung der Aufgabe erfolgt durch ein Fixiermittel mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Fixiermittel für ein Getriebeteil, umfassend einen Grundkörper mit einem ersten und zumindest einem zweiten Außengewinde und einem in axialer Richtung des Grundkörpers sich erstreckenden Durchgangsloch, einen in dem Durchgangsloch verschiebbar einsitzenden Bolzen und eine auf des zweite Außengewinde aufschraubbare Verschlussmutter, um das Durchgangsloch einseitig zu verschließen.

Bei dem Getriebeteil kann es sich beispielsweise um ein Getriebegehäuse oder einen zu dem Getriebegehäuse gehörenden Gehäuseflansch handeln. Der Grundkörper und das Durchgangsloch erstecken sind in Richtung einer Längsrichtung A_{L}. Die axiale Länge des Bolzens übersteigt die axiale Länge des Grundkörpers, so dass der Bolzen, während er in dem Grundkörper einsitzt, jedenfalls immer zu einer axialen Seite der Grundkörpers übersteht. Der Grundkörper ist insgesamt betrachtet hülsenartig gestaltet. Die Verschlussmutter kann derart auf den Grundkörper aufgeschraubt werden, dass eine Innenfläche der Verschlussmutter das Durchgangloch bündig abschließt.

In einer bevorzugten Ausgestaltung bildet der Grundkörper zwischen dem ersten und dem zweiten Außengewinde einen radial auskragenden Anlagebund aus. Durch diesen Anlagebund ist gewährleistet, dass der Grundkörper sich in einer definierten Position gegenüber einem Getriebeteil positionieren lässt.

In einer zudem bevorzugten Ausgestaltung weist die Verschlussmutter ein zudem zweiten Außengewinde des Grundkörpers korrespondierendes Innengewinde auf.

In einer weiterhin bevorzugten Ausgestaltung sind der Grundkörper und die Verschlussmutter aus dem Werkstoff 42CrMo4+QT gefertigt. Durch den Einsatz dieses Werkstoffs wird die Fressneigung erheblich reduziert.

In konkreter Ausgestaltung kann vorgesehen sein, dass der Bolzen mit einer Spielpassung in dem Durchgangsloch des Grundkörpers einsitzt.

Die Aufgabe wird zudem gelöst durch ein Planetengetriebe mit einem Getriebegehäuse und zumindest eine einen Planetenträger umfassende Planetenstufe, wobei mehrere, bevorzugt mindestens drei, über einen Umfang des Getriebegehäuses verteilte und den Planetenträger gegenüber dem Getriebegehäuse abstützende Fixiermittel wie beschrieben vorgesehen sind.

In einer bevorzugten Ausgestaltung des Planetengetriebes sitzen die Fixiermittel über das erste Außengewinde lösbar in jeweiligen Gewindebohrungen des Getriebegehäuses ein.

Zudem ist bevorzugt vorgesehen, dass drei, über einen Umfang des Getriebegehäuses verteilte Fixiermittel vorgesehen sind.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung eines Antriebsstrangs einer Windkraftanlage,
Fig. 2: ein Fixiermittel, eingesetzt in einer Getriebekomponente,
Fig. 3: eine rotorseitige Axialansicht einer Getriebekomponente mit eingesetzten Fixiermitteln und
Fig. 4: eine generatorseitige Axialansicht einer Getriebekomponente mit eingesetzten Fixiermitteln.

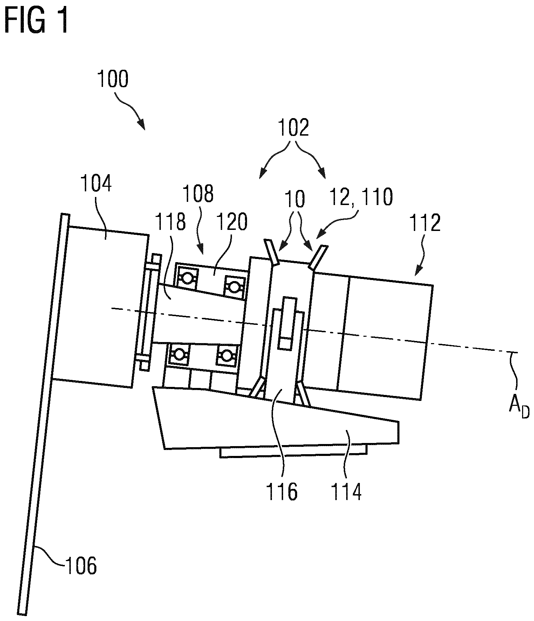

Die Figur 1 zeigt in schematischer und nicht maßstabsgetreuer Darstellung eine Windkraftanlage 100 in einer möglichen Ausführung. Gezeigt ist eine Seitenansicht mit teilweiser Schnittdarstellung. Die Windkraftanlage 100 steht gegenüber einem nicht dargestellten Turm unter einer Neigung, die in der Regel ca. 5° beträgt.

Wesentliches Element der Windkraftanlage 100 ist ein Antriebstrang 102, der vorliegend strukturell einen Rotorflansch 104 mit einem Mehrblattrotor 106, eine Rotorlagerung 108, eine Getriebekomponente 110 und einen Generator 112 umfassen kann. Über einen Maschinenträger 114 werden zumindest die Rotorlagerung 108 und der Generator 112 über einen nicht dargestellten Turm auf einem Boden abgestützt. Die Rotorlagerung 108 umfasst eine Rotorwelle 118, die z.B. über eine angestellte Kegelrollenlagerung gegenüber einem Rotorlagergehäuse 120 der Rotorlagerung 108 drehbar um die Triebstrangachse A_{D} gelagert ist. Die Triebstrangachse A_{D} bestimmt eine axiale Richtung.

An einem Ende der Rotorwelle 118 ist der Rotorflansch 104 und an diesem der Mehrblattrotor 106 gehalten. Das andere Ende der Rotorwelle 118 ist mit einer Getriebekomponente 110 antriebsmäßig verbunden, um ein von dem Mehrblattrotor 106 aufgebrachtes Antriebsmoment zu übersetzen. Ein aus der Drehmomentübersetzung resultierendes Reaktionsmoment der Getriebekomponente 110 - und auch des angeflanschtes Generators 112 - ist über eine Drehmomentstütze 116 gegenüber dem Maschinenträger 114 abgestützt. Die Getriebekomponente 110 ist als Planetengetriebe mit einer oder mehreren Planetenstufen ausgeführt. Die Getriebekomponente 110 ist antriebsmäßig mit dem Generator 112 verbunden. Die Rotorwelle 118 ist mit einem Planetenträger 14 der Getriebekomponente 110 verbunden. Der Planetenträger 14 verfügt innerhalb der Getriebekomponente 110 über keine eigene Lagerung. Der Planetenträger ist mittelbar über der Rotorlagerung 108 gelagert. Mit dem Bezugszeichen 10 sind temporär und bedarfsweise einsetzbare Fixiermittel bezeichnet, die im weiteren Verlauf noch beschrieben werden. Der Maschinenträger 114, die Rotorlagerung 108 mit Rotorwelle 118, die Drehmomentstütze 116 und die Getriebekomponente 110 können als Getriebeantriebsstrang 10 bezeichnet werden.

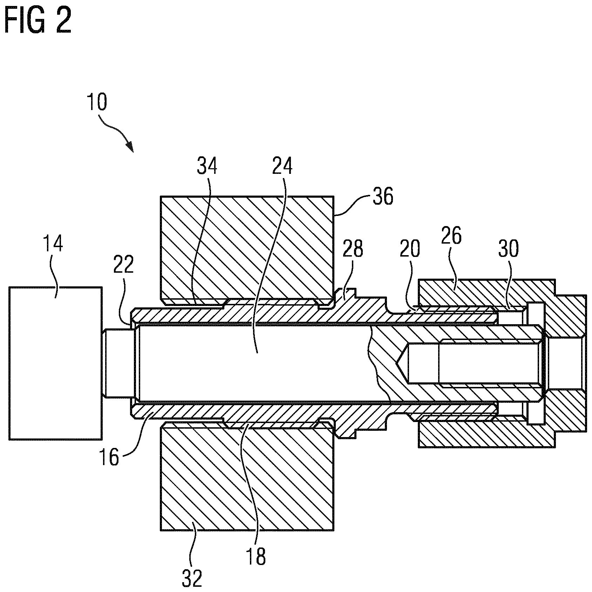

Die Figur 2 zeigt ein Fixiermittel 10. Zusätzlich zu dem Fixiermittel 10 ist ausschnittsweise und schematisch ein Gehäusegehäuse 32 als Teil einer Getriebekomponente 110 und der Planetenträger 14 einer ersten Planetenstufe 12 der Getriebekomponente 110 gezeigt.

Das Fixiermittel 10 ist mehrteilig aufgebaut. Das Fixiermittel 10 besteht aus einem Grundkörper 16, der eine Durchgangsbohrung 22 ausbildet, die sich in axialer Richtung A des Grundkörpers 16 erstreckt. Der Grundkörper 16 bildet ein ersten Außengewinde 18 und eine zweites Außengewinde 20 aus. Der Grundkörper 16 bildet zwischen dem ersten 18 und dem zweiten Außengewinde 20 einen radial auskragenden Anlagebund 28 aus. Der Grundkörper 16 ist über das erste Außengewinde 18 in eine Gewindebohrungen 34 des Getriebegehäuses 32 in dieses eingesetzt bzw. eingeschraubt. Der Grundkörper 16 ist soweit in die Gewindebohrung 34 eingesetzt, dass der Anlagebund 28 auf einer Außenfläche 36 des Getriebegehäuses 32 anliegt und somit ein weiteres Einschrauben des Grundkörpers 16 begrenzt.

In dem Durchgangsloch 22 des Grundkörpers 16 sitzt zudem verschiebbar ein Bolzen 24 ein. Der Bolzen 24 erstreckt sich ebenfalls in axialer Richtung A. Weiterhin ist eine aufschraubbare Verschlussmutter 26 vorgesehen. Die Verschlussmutter 26 weist ein zu dem zweiten Außengewinde 20 des Grundkörpers 16 korrespondierendes Innengewinde 30 auf. Die Verschlussmutter 26 ist, wie dargestellt, auf das zweite Außengewinde 20 aufgeschraubt, um das Durchgangsloch 22 einseitig zu verschließen. Der Bolzen 24 sitzt mit einer Spielpassung in dem Durchgangsloch 22 des Grundkörpers 16 ein.

Anhand der Figur 2 ist zu erkennen, dass der Grundkörper 16 über das erste Außengewinde 18 in die Gewindebohrung 34 eingeschraubt ist und somit über das Getriebegehäuse 32 in Position gehalten ist. Der Bolzen 24 ist vorliegend in Anlage zu dem Planetenträger 14 dargestellt. Indem nun die Verschlussmutter 26 auf den Grundkörper 16 geschraubt wird, wird, nachdem die Verschlussmutter 26 den Bolzen 24 kontaktiert hat, wird der Bolzen 24 durch ein weiteres Aufschrauben der Verschlussmutter 26 gegen den Planetenträger 14 beaufschlagt.

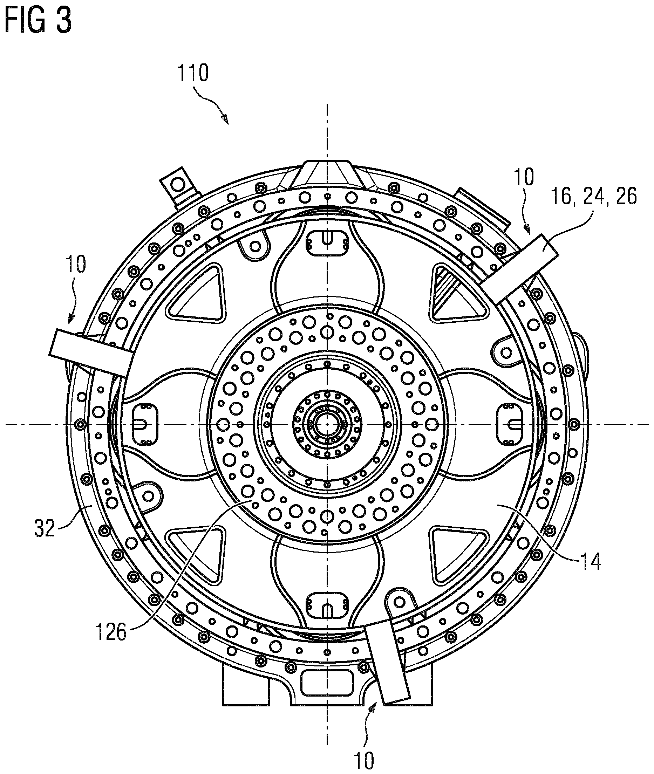

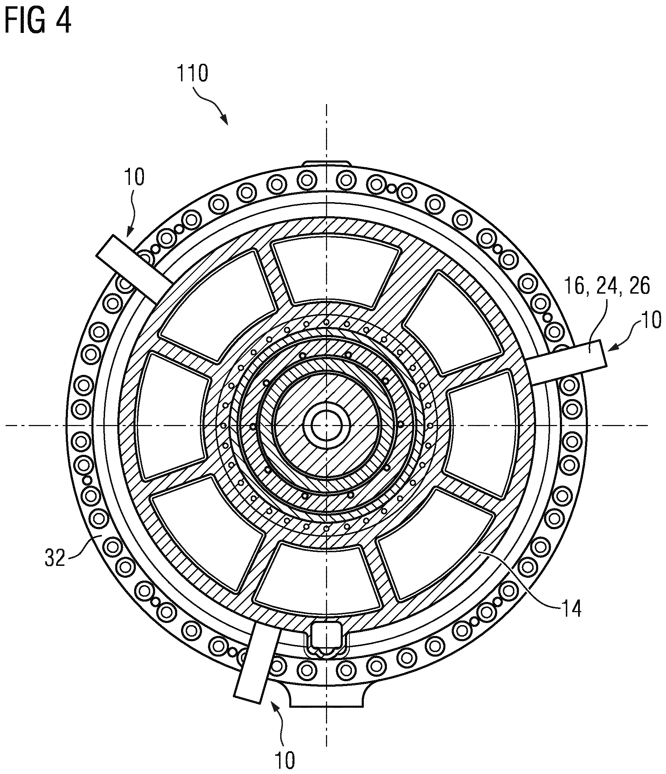

Die Figuren 3 und 4 zeigen eine rotorseitige - Figur 3 - und eine generatorseitige - Figur 4 - Axialansicht der als Planetengetriebe ausgeführten Getriebekomponente 110. In Figur 3 ist mittig mit dem Bezugszeichen 126 der Flansch bezeichnet, über den der Planetenträger 14 an die Rotorlagerung 108 angebunden ist. Zu erkennen sind jeweils drei - rotorseitig und generatorseitig - über den Umfang des Getriebegehäuses 32 verteilt angeordnete Fixiermittel 10, über die der Planetenträger 14 gegenüber dem Getriebegehäuse 32 in einer definierten und arretierten Position gehalten wird. Es wird ein mehrteiliges System bereitgestellt, bei dem der Bolzen 24 mittelbar über den in der Getriebekomponente 110 einsitzenden Grundkörper 16 und die Verschlussmutter 26 verspannt wird. Der als Gewindebuchse fungierende Grundkörper 16 kann nach dem Lösen der Verschlussmutter 26 vorspannungsfrei herausgeschraubt werden.

### Bezugszeichenliste

- 10: Fixiermittel
- 12: Planetenstufe
- 14: Planetenträger
- 16: Grundkörper
- 18: Außengewinde
- 20: Außengewinde
- 22: Durchgangsbohrung
- 24: Bolzen
- 26: Verschlussmutter
- 28: Anlagebund
- 30: Innengewinde
- 32: Getriebegehäuse
- 34: Gewindebohrungen
- 36: Außenfläche
- 100: Windkraftanlage
- 102: Antriebstrang
- 104: Rotorflansch
- 106: Mehrblattrotor
- 108: Rotorlagerung
- 110: Getriebekomponente
- 112: Generator
- 114: Maschinenträger
- 116: Drehmomentstütze
- 118: Rotorwelle
- 120: Rotorlagergehäuse
- 126: Flansch

## Patentansprüche

1. Fixiermittel (10) für eine Getriebekomponente (110), umfassend einen Grundkörper (16) mit einem ersten (18) und zumindest einem zweiten Außengewinde (20) und einem in axialer Richtung des Grundkörpers (16) sich erstreckenden Durchgangsloch (22),
einen in dem Durchgangsloch (22) verschiebbar einsitzenden Bolzen (24) und
eine auf das zweite Außengewinde (20) aufschraubbare Verschlussmutter (26), um das Durchgangsloch (22) einseitig zu verschließen.

2. Fixiermittel (10) nach Anspruch 1, **dadurch gekennzeichnet, dass** der Grundkörper (16) zwischen dem ersten (18) und dem zweiten Außengewinde (20) einen radial auskragenden Anlagebund (28) ausbildet.

3. Fixiermittel (10) nach Anspruch 1 oder 2, **dadurch gekennzeichnet, dass** die Verschlussmutter (26) ein zu dem zweiten Außengewinde (20) des Grundkörpers (16) korrespondierendes Innengewinde (30) aufweist.

4. Fixiermittel (10) nach einem der Ansprüche 1 bis 3, **dadurch gekennzeichnet, dass** der Grundkörper (16) und die Verschlussmutter (26) aus dem Werkstoff 42CrMo4+QT gefertigt sind.

5. Fixiermittel (10) nach einem der Ansprüche 1 bis 4, **dadurch gekennzeichnet, dass** der Bolzen (24) mit einer Spielpassung in dem Durchgangsloch (22) des Grundkörpers (16) einsitzt.

6. Getriebekomponente (110), insbesondere Planetengetriebe, mit einem Getriebegehäuse (32) und zumindest eine einen Planetenträger (14) umfassende Planetenstufe (12), wobei mehrere, bevorzugt mindestens drei, über einen Umfang des Getriebegehäuses (110) verteilte und den Planetenträger (14) gegenüber dem Getriebegehäuse (12) abstützende Fixiermittel (10) nach einem der vorangegangenen Ansprüche vorgesehen sind.

7. Getriebekomponente (110) nach Anspruch 6, **dadurch gekennzeichnet, dass** drei rotorseitige und axial beabstandet drei generatorseitige Fixiermittel (10) vorgesehen sind.

8. Getriebekomponente (110) nach Anspruch 6 oder 7, **dadurch gekennzeichnet, dass** die Fixiermittel (10) über das erste Außengewinde (18) lösbar in jeweiligen Gewindebohrungen (34) des Getriebegehäuses (32) einsitzen.

9. Getriebekomponente (110) nach Anspruch 6, 7 oder 8, **dadurch gekennzeichnet, dass** drei, über einen Umfang des Getriebegehäuses (32) verteilte Fixiermittel (10) vorgesehen sind.
